# EUROPEAN PATENT SPECIFICATION

(11) **EP 3 230 154 B1**
(45) Date of publication and mention of the grant of the patent: **26.06.2019**
(21) Application number: 14908024.4
(22) Date of filing: 11.12.2014
(51) Int. Cl.: B62J 17/00, B62J 23/00

(54) **FRONTAL COVER INSTALLATION STRUCTURE FOR MOTORCYCLE**
AUFBAU EINER FRONTABDECKUNGSINSTALLATION FÜR EIN MOTORRAD
STRUCTURE D'INSTALLATION DE COUVERTURE FRONTALE POUR MOTOCYCLETTE

(43) Date of publication of application: 18.10.2017
(73) Proprietor: Honda Motor Company Limited, Tokyo 107-8556 (JP)
(72) Inventor: KHANKHWA, Witsarut, Bangkok 10520 (TH)
(74) Representative: Kiwit, Benedikt
(86) International application number: PCT/TH2014/000054
(87) International publication number: WO 2016/093774

(56) References cited:
- JP-A- H11 152 068
- JP-A- H11 198 881
- JP-A- S58 133 975
- JP-A- 2012 116 298

## Description

### TECHNICAL FIELD

Aspects of the present disclosure relate to a front cover that surrounds frontal portions of a motorcycle steering head pipe and an inner cover that surrounds rearward portions of the steering head pipe, where the front cover and the inner cover are engageable by way of snap fit joints. Each of the front cover and the inner cover carries both male and female snap elements in accordance with a snap element arrangement that enhances the ease of insertion of rider items therein and withdrawal of rider items therefrom.

### BACKGROUND ART

Motorcycles such as scooters include cover members that form portions of a frontal cover assembly that shields and protects a rider's legs. Such cover members include a front cover having an outer surface that faces forward, and which surrounds frontal portions of a steering head pipe; and an inner cover having an outer surface that faces rearward (i.e., toward the rider's legs), and which surrounds rearward portions of the steering head pipe. The front cover and the inner cover are secured together by way of fastening mechanisms. Japanese Utility model H06-15791 discloses the front cover carries only female snap elements, while the inner cover carries only male snap elements to thereby enable snap fit engagement of the front cover with the inner cover in one embodiment and in another embodiment, the front cover carries only male snap elements, and the inner cover carries only snap female elements to thereby enable such snap fit engagement.

JP H11-152068 A, which is regarded as the closest prior art, describes a leg shield 22, which is provided with a bag-shaped inner rack 43 with an opening in the upper part. The lower wall of an upper inner cover 41 in the leg shield 22 is used as an inner rack front wall 41a and the upper wall of a lower inner cover 42 is used as an inner rack rear wall 42a. The inner rack front wall 41a and the inner rack rear wall 42a form the inner rack 43. A plurality of holes 42b are provided in the inner rack rear wall 42a. An article can be taken in and out through an upper opening part 43b and the article housed in the inner rack 43 can be visually confirmed from a side through the holes 42b.

### DISCLOSURE / DESCRIPTION

### Technical Problem

Each female snap element requires a predetermined amount of spatial clearance for receiving, accommodating and securely engaging with its counterpart male snap element. For instance, a female snap element carried by the inner cover requires a certain amount of spatial clearance in a rearward direction to accommodate a rearward projecting male snap element carried by the front cover. As a result of this spatial clearance requirement, for a motorcycle having an inner cover that carries female snap elements, portions of the inner cover corresponding to the female snap elements occupy a more rearward position on the motorcycle compared to an inner cover that lacks female snap elements, which can be undesirable with regard to space efficiency and/or visual appearance.

Especially, motorcycles such as scooters commonly include an inner rack pocket r that is mounted behind the inner cover. The inner rack pocket includes an inner rack opening that aligns with an upper aperture of the inner rack pocket, such the rider can insert items into and withdraw items from the inner rack pocket. If the snap fit structure above the inner rack opening needs spatial clearance, the inner cover projects to a more rearward position and the rider can't quickly and easily insert various types of items in the inner rack pocket, and quickly and easily withdraw such items therefrom. On the other hand, the front cover is assembled to the inner cover after setting the inner cover to the motorcycle frame. Then, mounting the male snap element on the front cover results in easier assembly of the front cover to the inner cover from forward to rearward because a factory staff member moves the front cover toward and to the inner cover.

It is therefore desirable to provide a front cover assembly or structure that establishes a secure, space efficient snap fit joint arrangement between a front cover and an inner cover that facilitates easy and quick insertion of rider items into and withdrawal or rider items from the inner rack pocket while keeping easy / easier assembly of the front cover and the inner cover.

### Technical Solution

This invention according to claim 1 is a motorcycle front cover structure including a front cover surrounding front portions of a steering head pipe, the front cover having a rear side facing the steering head pipe; and an inner cover surrounding rear portions of the steering head pipe, the inner cover including a front side facing the steering head pipe, and mounting an inner rack rearward, wherein the rear side of said front cover is attached to the front side of said inner cover by way of a plurality of snap fit joints, each of the plurality of snap fit joints formed by mating snap fit engagement of a male snap element with a female snap element. The motorcycle front cover structure is characterized in that above an inner rack opening corresponding to said inner rack, said inner cover carries said male snap element, and below said inner rack opening, said front cover carries said male snap element.

This invention according to claim 2 has, in the motorcycle front cover structure of claim 1, a characteristic in that said inner cover includes a hole portion forming a part of said inner rack opening, and wherein an inner rack cover is mounted to said inner cover from forward as forming said inner rack opening together with the hole portion of said inner cover.

This invention according to claim 3 has, in the motorcycle front cover structure of claim 1, a characteristic in that from a side view, a first snap fit joint is disposed at an upper portion of said front cover, a second snap fit joint is disposed below the first snap fit joint and above said inner rack opening, and the first and second snap fit joints include said female snap element carried by said front cover and said male snap element carried by said inner cover; and a third snap fit joint is disposed below said inner rack opening, and includes said male snap element carried by the front cover and said female snap element carried by said inner cover.

This invention according to claim 4 has, in the motorcycle front cover structure of claim 1, a characteristic in that a lengthwise axis of each snap fit joint is oriented in an oblique downward and forward direction, and the lengthwise axis of each snap fit joint is approximately parallel to each other snap fit joint lengthwise axis.

This invention according to claim 5 has, in the motorcycle front cover structure of claim 1, a characteristic in that left and right outer sides of said front cover form an overlapping portion that overlaps left and right outer sides of said inner cover from outsides, respectively, and wherein an engagement portion of said snap fit joints are disposed forward of the overlapping portion from a side view.

This invention according to claim 6 has, in the motorcycle front cover structure of claim 1, a characteristic in that said inner rack cover is integrally formed to extend proximate to right and left outer sides of said inner cover to respectively provide a right inner rack pocket and a left inner rack pocket, and wherein said inner rack cover is secured to said inner cover by upper and lower fastening elements between said second snap fit joint and said third snap fit joint.

This invention according to claim 7 has, in the motorcycle front cover structure of claim 1, a characteristic in that said snap fit joints have a connecting force in side direction, said front cover and said inner cover are secured to each other by way of fastening elements disposed above or close to said first snap fit joint, a front lower cover and a lower portion of said front cover are secured to each other by way of fastening elements, and the front lower cover is secured to said inner cover from forward by fastening elements.

### Advantageous Effects

According to the invention disclosed in Claim 1, above the inner rack opening, a forwardly extending female snap element that is carried by the front cover can provide forward spatial clearance for male snap element carried by the inner cover. As a result, an upper portion of the inner cover is drawn forward toward the front cover. Therefore, portions above the inner rack opening can occupy a more forward position on the motorcycle. Additionally, the inner rack opening and the inner rack pocket corresponding thereto are unobstructed by the snap fit joint disposed above the inner rack opening, thereby facilitating quick and easy insertion of rider objects into and removal of rider objects from the inner rack pocket.

Furthermore, the front cover also carries the male snap element below the inner rack opening, and can provide easier assembling because the front cover is moved to the inner cover for aiming by the male snap element to the female snap element. Accordingly, this invention makes it possible to provide a front cover assembly or structure that establishes a secure, space efficient snap fit joint arrangement between a front cover and an inner cover that facilitates easy and quick insertion of rider items into and withdrawal or rider items from the inner rack pocket with keeping easier assemble the front cover and the inner cover.

According to the invention disclosed in Claim 2, the inner rack cover is secured to the inner cover from a forward direction, and the fixing portion of both covers is positioned inside the space between the front cover and the inner cover. As a result, the manner in which the inner rack cover is secured to the inner cover remains hidden from an exterior view of the motorcycle, enhancing the motorcycle's visual design appearance together with ensuring a good appearance of the snap fit connecting the front cover and the inner cover.

According to the invention disclosed in Claim 3, above the inner rack opening, the inner cover carries the two male snap elements, while the front cover carries two counterpart female snap elements. As a result, the inner cover need not provide rearward clearance for male snap elements above or proximate to the inner rack opening. Consequently, portions of the surface of the inner cover above the inner rack opening can extend in a more forward or less rearward direction, such that the rider finds it easier to insert items into and remove items from the inner rack pocket. Additionally, the arrangement of the three snap fit joints are optimal with respect to minimizing the number of snap fit joints required for reliably providing secure snap fit engagement between the front cover and the inner cover.

According to the invention disclosed in Claim 4, as a result of the orientation of the lengthwise axis of the snap fit joints, it is simple, quick, and easy to assemble snap fit engagement from frontward and downward between the front cover and the inner cover, thereby reducing the assembly time of the front cover structure and enhancing the assembled reliability thereof.

According to the invention disclosed in Claim 5, because the engagement portion of male and female snap element is positioned forward of the overlapping portion, the inner cover could be pulled forward by the front cover in a manner that keeps the structural stability of the length of overlapping portion.

According to the invention disclosed in Claim 6, because the inner rack cover is integrally formed to extend to both right and left sides of the motorcycle, the structural integrity of the inner rack cover compensates the strength of the inner cover and it causes stable engagement of the front cover with the inner cover by snap fit joints. Additionally, upper and lower fastening elements such as screws inserted into bosses are vertically positioned near between the second and third snap fit joints. Such bosses can be formed in portions of the inner cover and enhance the structural strength of the inner cover, which aids quick and easy snap fit engagement between the front cover to the inner cover and makes a better snap fit connection force.

According to the invention disclosed in Claim 7, side friction type snap fit joints having the connection force in side direction have sufficient clearance in the up and down direction. However, three fastening elements secure the front cover and the inner cover through the front lower cover at positions above and below the snap fit joints. It's possible to keep a high quality cover fitting appearance even with the adaptation of side friction snap fit joints. Also, better appearance can be provided because fastening portions are difficult to see in a side view.

### Brief Description of the Drawings

FIGs. 1A and 1B are a front view and a left side view, respectively, of a motorcycle front cover assembly or structure in accordance with an embodiment of the present disclosure.
FIG. 2 is another front view showing portions of the motorcycle front cover structure of FIG. 1A, in which a front cover is shown in outline form, and structures disposed rearward of the front cover are identified with dashed lines in accordance with an embodiment of the present disclosure.
FIG. 3A is a top view showing portions of the front cover structure, in which the front cover is shown in outline form, and portions of structures disposed below the front cover are indicated with dashed lines in accordance with an embodiment of the present disclosure.
FIG. 3B is a top view showing an inner cover and an inner rack cover (without the front cover) in which the inner cover is shown in outline form, and portions of the inner rack cover that reside below the inner cover are indicated with dashed lines in accordance with an embodiment of the present disclosure.
FIG. 4A is a rear view of the front cover structure, in which the inner cover is shown in outline form, and portions of structures that reside forward of the inner cover are indicated with dashed lines in accordance with an embodiment of the present disclosure.
FIG. 4B is an illustration of cross section AA of FIG. 4A in accordance with an embodiment of the present disclosure.
FIG. 4C is an illustration of cross section XX of FIG. 4A in accordance with an embodiment of the present disclosure.
FIG. 5A is a right side view of the front cover structure in accordance with an embodiment of the present disclosure.
FIG. 5B is an illustration of cross section BB of FIG. 5A in accordance with an embodiment of the present disclosure.
FIG. 5C is an illustration of cross section CC of FIG. 5A in accordance with an embodiment of the present disclosure.
FIGs. 6A illustrates particular aspects of a representative male snap element and a representative female snap element in accordance with an embodiment of the present disclosure.
FIG. 6B is a cross sectional view through a representative snap fit joint formed by way of snap fit engagement of the male snap element and the female snap element in accordance with an embodiment of the present disclosure.
FIG. 7 shows a front surface of the inner cover and mounting of the inner rack cover thereto from forward in accordance with an embodiment of the present disclosure.

### Detailed Description of Example Embodiments

Individuals having ordinary skill in the relevant art will readily understand that a motorcycle typically includes various types of cover members configured for covering or concealing internal portions of the motorcycle, such as portions of the motorcycle's frame and structures or devices carried thereby. Such cover members are designed to provide the motorcycle with an intended visual appearance, and protect internal motorcycle parts. Additionally, cover members carried by frontal portions of the motorcycle can form a front cover structure that can protects or shields lower portions of the motorcycle rider's body from oncoming wind and debris or small objects traveling in a generally rearward direction relative to the front of the motorcycle.

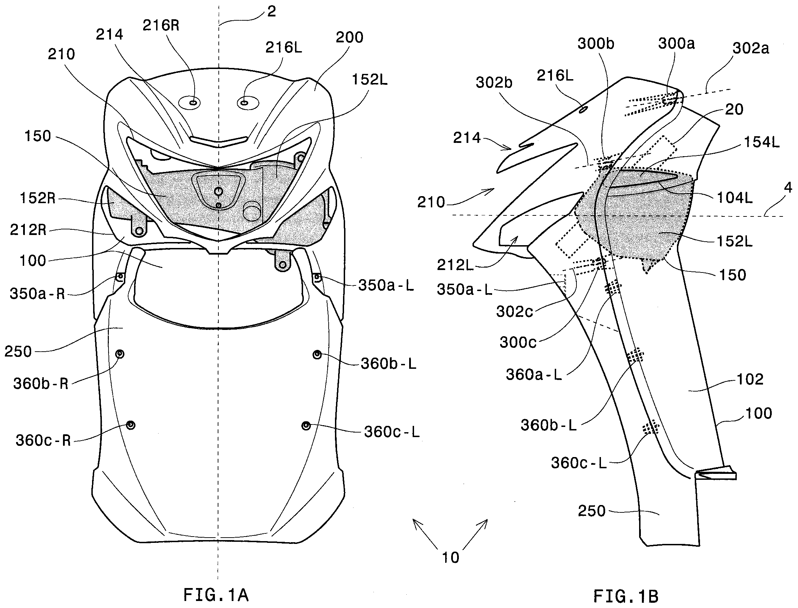

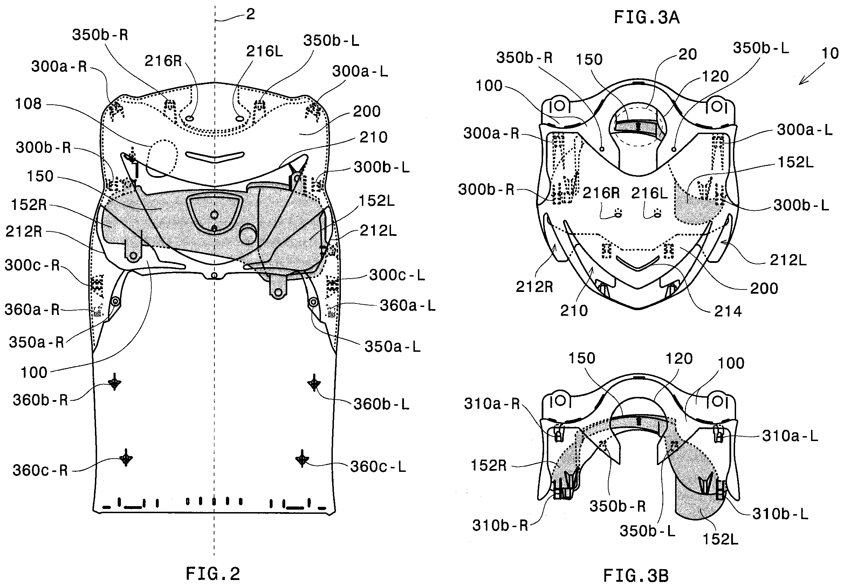

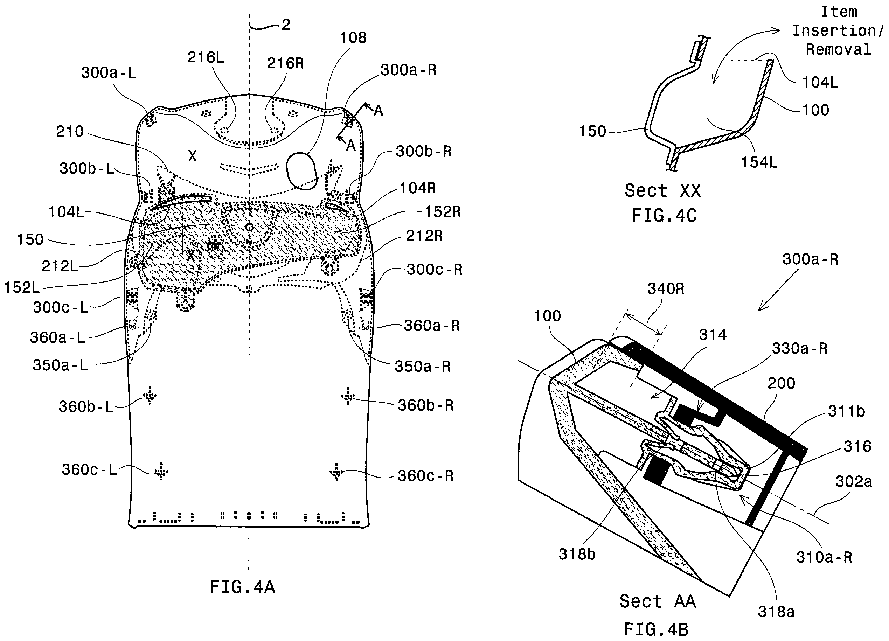

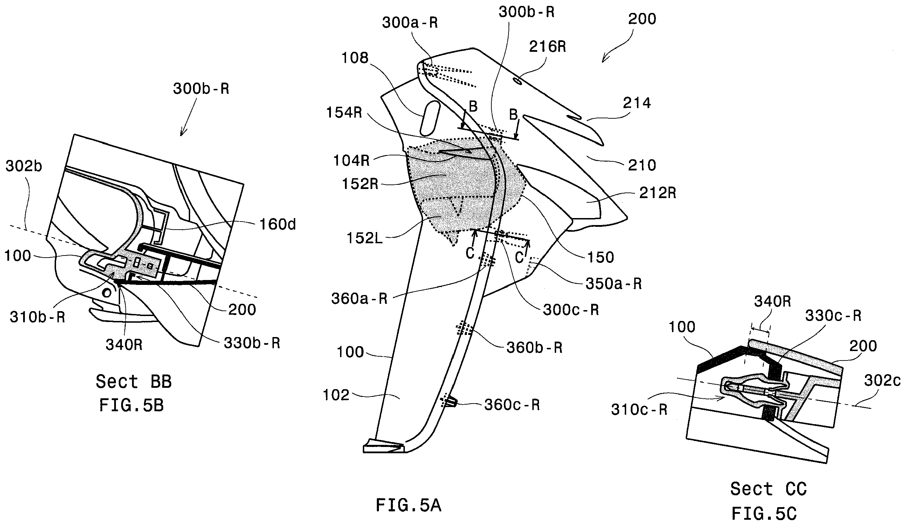

FIGs. 1A and 1B are a front view and a left side view, respectively, of a front cover structure 10 for a motorcycle such as a scooter, which includes an inner cover 100, an inner rack cover 150, a front cover 200, and a front lower cover 250 in accordance with an embodiment of the present disclosure. FIG. 2 is a front view corresponding to FIG. 1A, in which the front cover 200 is shown in outline form and portions of the inner cover 100 and the inner rack cover 150 that reside behind the front cover are indicated with dashed lines. FIG. 3A is a top view showing portions of the front cover structure 10, in which the front cover 200 is shown in outline form and portions of the inner cover 100 and the inner parts including the inner rack cover 150 disposed below the front cover 200 are indicated with dashed lines. FIG. 3B is a top view showing an inner cover 100 and an inner rack cover 150 in which the inner cover 100 is shown in outline form and portions of the inner rack cover 150 that reside below the inner cover 100 are indicated with dashed lines. FIG. 4A is a rear view of the front cover structure 10, in which the inner cover 100 is shown in outline form, and portions of the inner rack cover 150 and the front cover 200 are indicated with dashed lines. FIG. 5A is a right side view of the front cover structure 10 in accordance with an embodiment of the present disclosure.

Referring to FIG 1A, exposed or exterior portions of the front cover 200 form upper portions of the front exterior surface of the front cover structure 10. The front cover 200 includes a number of apertures or openings formed therein that are shaped to accommodate a plurality of motorcycle lighting elements. For instance, in the embodiment shown, the front cover 200 includes a headlight unit aperture 210 that is symmetrically disposed on right and left sides of a motorcycle center line 2 that vertically bisects the front cover structure 10; a pair of winker unit apertures 212R,L that are respectively disposed on right and left sides of the center line 2; and a hole for a horn 214, which resides above or superior to the headlight unit aperture 210, and which is also symmetrically disposed on right and left sides of the center line 2. An upper portion of the front cover 200 additionally includes right and left stay apertures 216R,L through which right and left portions of a front number plate stay or retention structure protrude.

The front lower cover 250 is attached below the front cover 200. Exposed or exterior portions of the front lower cover 250 form lower portions of the front exterior surface of the front cover structure 10. As readily understood by an individual having ordinary skill in the relevant art, the motorcycle includes a front wheel and tire (not shown), each of which resides below the front cover 200 and forward of the front lower cover 250.

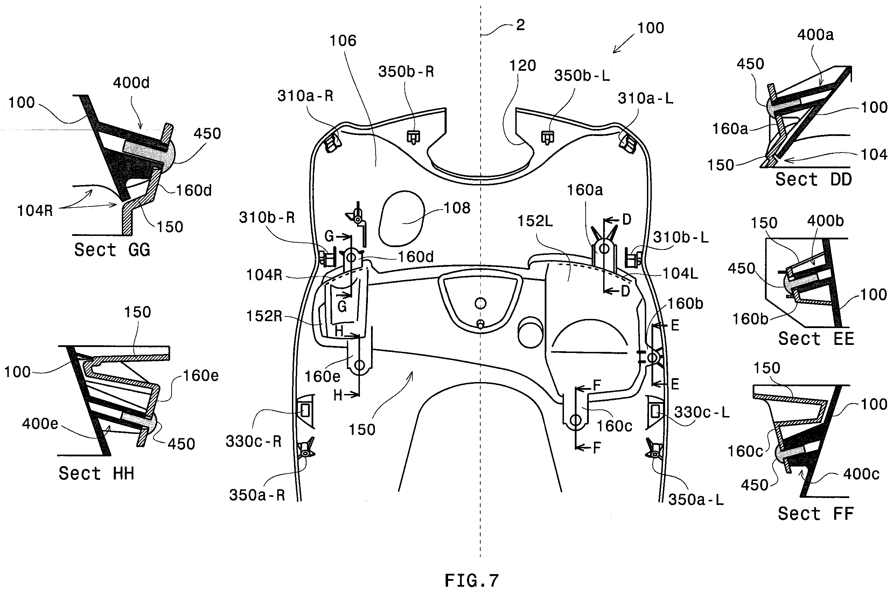

As indicated in FIG. 1B and 4A, exposed or exterior portions of the inner cover 100 form a posterior or rearward facing side 102 thereof, which forms portions of the rear exterior surface of the front cover structure 10, which faces toward the rider. During the assembly of the front cover structure 10, the inner cover 100 serves as a reference mounting element to which the inner rack cover 150, the front cover 200 and the front lower cover 250 are securely mounted or installed in sequential order from the inner cover's front side. Prior to the installation of the front lower cover 250 and the front cover 200 on the inner cover 100, the inner rack cover 150 is securely mounted to the inner cover 100 by way of a set of fastening elements inserted into five inner rack cover and inner cover fixing points provided on the inner cover 100, as further detailed below with reference to FIG. 7. As indicated in FIGs. 1A - 1B, the inner rack cover 150 is mounted to an anterior or forward facing side of the inner cover 100 and is disposed forward thereof.

After its installation to the inner cover 100, the inner rack cover 150 is vertically positioned at the height of and directly rearward and generally or substantially within the vertical extent of the front cover's headlight unit aperture 210 in the front view. In various embodiments, the inner rack cover 150 is formed as a single structure or a single piece of material (e.g., a single piece of plastic polymer material, which can be fabricated in a cost effective manner by way of a conventional molding process) that extends at least proximate to right and left outer sides of the inner cover 100. As a result, the inner rack cover 150 can strengthen or compensate the strength of the inner cover 100 and enhance the structural stability or integrity of the inner cover 100 when secured thereto, which aids mounting of the front cover 200 to the inner cover 100. This correspondingly causes stable engagement of the front cover with the inner cover by snap fit joints 300 as further detailed below.

The inner rack cover 150 provides a right inner rack portion 152R disposed on the right side; and a left inner rack portion 152R disposed on the left side. The right and left inner rack portions 152R,L respectively form a right and a left inner rack pocket 154R,L as attaching with the front surface of the inner cover 100.. Each such pocket 154R,L has a predetermined internal shape and volume, and is intended for receiving and carrying items inserted therein by the rider. The inner cover 100 includes each inner rack opening 104R,L that aligns with an upper boundary or border of each corresponding inner rack pocket 154R,L to facilitate rider insertion of items into and withdrawal of items from the inner rack pockets 154R,L. Each inner rack opening 104R,L is formed by the upper surface of the inner rack cover 150 and a hole portion of the inner cover 100. The hole portion of the inner cover 100 forms the rear portion of the inner rack opening 104; also, the inner rack cover 150 forms the front surface of the inner rack pocket 154 and front portion of the inner rack opening 104 when the inner rack cover was attached to the inner cover from forward. Accordingly, formation of the inner rack openings 104R,L of the inner rack pockets 154 R,L occurs at the attachment of both covers 100, 150. As indicated in FIGs. 1A, 3A - 3B, and 4, the right inner rack pocket 154R is typically significantly smaller than the left inner rack pocket 154L, for instance, to allow for the presence of an ignition switch unit (not shown) within an upper aperture 108 disposed on the posterior side of the inner cover 100. Thus, the left inner rack pocket 154L extends across a greater distance in both lateral and forward directions compared to the right inner rack pocket 154R, as shown in FIGs. 1, 2, 3A, and 3B. Accordingly, there are three fastening points for left inner rack pocket 154L, which is more than for the right inner rack pocket 154R.

After the inner rack cover 150 has been mounted to the inner cover 100, the front lower cover 250 is mounted to the inner cover 100 by way of non-snap fit fastening elements such as screws that are received at first front lower cover - inner cover fixing points 360a,b,c-R,L on the inner cover 100. In practice, at first the front lower cover 250 is set to the scooter's main frame (not shown) and then the inner cover 100 is attached to the front lower cover 250. Three fixing points 360a,b,c-R,L are disposed on lower regions of the inner cover 100, and can include structures such as bosses of the front surface of the inner cover. The top fixing points 360a-R,L are hidden by the front cover 200 when the front cover is attached to the inner cover (and hence such fixing points 360a-R,L are not shown in FIG 1A).

The front lower cover 250 is further fixed at the fixing points 350aR,L on the front cover 200. The front lower cover 250 thus vertically extends along a predetermined lower section or region of the inner cover 100. Subsequently, below the snap fit joints 300a-c, the front cover 200 is fixed to the inner cover 100 through the front lower cover 250 in the manner of non-snap fit fastening, because the snap fit joints 300 are side friction type and have clearance in the up and down direction.

Following installation of the front lower cover 250 on the inner cover 100, the front cover 200 is mounted to the front side of the inner cover 100 above the front lower cover 250, and is disposed forward of each of the inner cover 100 and the inner rack cover 150. The front cover 200 vertically extends along a predetermined upper section or region of the inner cover 100 when installed thereon. As further described in detail below, the front cover 200 is initially mounted to the inner cover 100 by way of a plurality of snap fit joints 300, after which the front cover 200 is further secured to the inner cover 100 by way of one or more types of non-snap fit fastening elements such as screws and/or bolts. These non-snap fit fastening elements are received at a plurality of fixing points 350 on the inner cover 100, which include front cover - front lower cover fixing points 350a-R,L as indicated in FIGs. 1A and 1B; and front cover - inner cover fixing points 350b-R.L, as indicated in FIG. 3A. The front cover - front lower cover fixing points 350a-R,L are located on right and left bottom sides of the front cover 200 near a middle height region of the inner cover, at almost same height of the top front lower cover - inner cover fixing points 360a-R.L. The front cover - front lower cover fixing points 350a-R,L align with counterpart apertures on lower lateral or outer portions of the front cover 200. Both fixing points 360a,b,c-R,L and 350a-R,L can include structures such as bosses, in a manner readily understood by an individual having ordinary skill in the relevant art. The front cover - inner cover fixing points 350b-R,L are located on right and left sides of a top surface of the inner cover 100, and align with counterpart apertures on an upper portion of the front cover 200. At the fixing points 350a-R,L, the fastening elements are fastened from a forward direction, and at the fixing points 350b-R,L, the fastening elements are fastened from an upward direction. Both of such fixing points 350a,b-R,L are located at upper and lower portions of the extent of the snap fit joints 300, causing the up and down clearance of side friction snap fit joints to disappear and making for high quality cover fitting.

As indicated in FIG. 1B, the front cover structure 10 surrounds or encloses a steering head pipe 20, as well as portions of a main or forward frame member (not shown). More particularly, the steering head pipe 20 vertically extends along a portions of a motorcycle center line 2 that vertically bisects the front cover 200, such that the steering head pipe 20 is centrally disposed in a lateral direction relative to the outer edges of the inner cover 100 and the outer edges of the front cover 200. The steering head pipe 20 is configured to receive a steering stem (not shown) that is coupled a front fork (not shown) in a manner readily understood by an individual having ordinary skill in the relevant art.

As previously indicated, the front cover 200 is initially secured to the inner cover 100 by way of a plurality of snap fit joints 300. As detailed hereafter, each snap fit joint 300 is formed by way of locking snap fit union or mating engagement between a male snap element carried by one of the inner cover 100 and the front cover 200, and a female snap element carried by the other of the inner cover 100 and the front cover 200. Each snap fit joint 300 is disposed at a predetermined lateral and vertical position and a predetermined orientation relative to portions of the front cover structure 10 and each other snap fit joint 300 in a manner that makes the scooter's appearance better, provides a high quality image, and aids rapid, convenient, and reliable installation of the front cover 200 on the inner cover 100.

In various embodiments, the front cover structure 10 includes three pairs of snap fit joints 300a-c, namely: a pair of (a) first snap fit joints 300a-R,L; a pair of (b) second snap fit joints 300b-R,L; and a pair of (c) third snap fit joints 300c-R,L, which are positioned at predetermined lateral and vertical positions proximate to, neighboring, or bordering right and left outer edges of the front cover structure 10. The first snap fit joints 300a-R,L are respectively disposed on right and left sides of an upper portion of the front cover structure 10, above the second snap fit joints 300b-R,L. The second snap fit joints 300b-R,L are respectively disposed on right and left sides of the front cover structure 10, above the inner rack openings 104R,L (e.g., at least slightly above the inner rack openings 104R,L). Finally, the third snap fit joints 300c-R,L are respectively disposed below the inner rack openings 104R,L. Embodiments that include only three pairs of snap fit joints 300a-c vertically arranged in a manner identical or similar to that described herein provide a configuration of snap fit joints 300 that results in reduced snap fit joint count (and hence cost savings) as well as better appearance, rapid, easy, and reliable snap fit engagement of the front cover 200 with the inner cover 100.

FIG. 4B is an illustration of cross section AA of FIG. 4A, which shows first snap fit joint 300a-R, and which is formed by way of snap fit engagement between a male snap element 310 carried by upper portion of the inner cover 100 and a counterpart female snap element 330 carried by upper portion of the front cover 200. FIG. 5B is an illustration of cross section BB of FIG. 5A, which shows second snap fit joint 300b-R disposed above the right inner rack opening 104R and below the first snap fit joint 300a-R of FIG. 4B, and which is formed by way of snap fit engagement between a male snap element 310 carried on the inner cover 100 and a counterpart female snap element 330 carried on the front cover 200. FIG. 5C is an illustration of cross section CC of FIG. 5A, which shows third snap fit joint 300c-R disposed below the inner rack opening 104R, and which is formed by way of snap fit engagement between a male snap element 310 carried by the front cover 200 and a counterpart female snap element 330 carried by the inner cover 100. Left side snap fit joints 300L are structured in an identical, essentially identical, or analogous manner to the right side snap fit joints 300R.

FIG. 4C is an illustration of cross section XX of FIG. 4A, illustrating a representative cross sectional profile of the left inner rack pocket 154L and its corresponding inner rack opening 104L formed as a result of snap fit joining of the inner cover 100 with the inner rack cover 150 by way of the snap fit joints 300a,b,c-L,R. As indicated in FIGs. 3B, 4B, and 5B, male snap elements 310a-R,L of the first snap fit joints 300a-R,L and male snap elements 310b-R,L of the second snap fit joints 300b-R,L are carried by the inner cover 100 rather than the front cover 200. Stated equivalently, the front cover 200 carries female snap elements 330a-R,L of the first snap fit joints 300a-R,L as well as female snap elements 330b-R,L of the second snap fit joints 300b-R,L, rather than carrying male snap elements 310a,b-R,L of the first and second snap fit joints 300a,b-R,L. As a result, proximate to and above the inner rack openings 104R,L the inner cover 100 does not carry, i.e., it excludes, female snap elements 330. Therefore, above the inner rack openings 104R,L the inner cover 100 does not require rearward spatial clearance for receiving and accommodating rearward projecting male snap elements 310, as indicated in FIG. 4C. Rather, above the inner rack openings 104R,L, the front cover 200 carries female snap elements 330a,b-R,L that provide forward clearance for receiving and accommodating forward projecting male snap elements 310a,b-R,L carried by the inner cover 100. Moreover, locking snap fit engagement of the male snap elements 310a,b-R,L of the first and second snap fit joints 300a,b-R,L with their counterpart female snap elements 330a,b-R,L causes the inner cover 100 to be drawn in a forward direction toward the front cover 200 and strongly secured thereto. Consequently, above the inner rack openings 104R,L, the inner cover 100 can be positioned, reside, extend, or be angled in a more forward direction. Furthermore, because the first and second snap fit joints 300a,b-R,L are disposed above the inner rack openings 104R,L, the first and second snap fit joints 300a,b-R,L do not interfere with the space above the inner rack openings 104R,L and their corresponding inner rack pockets 154R,L, thereby keeping or aiding easy insertion of rider items into and removal of rider items from the inner rack pockets 154R,L, as also indicated in FIG. 4C.

As illustrated in FIGs. 1B, 4B, 5B, and 5C, each snap fit joint 300 has a predetermined length parallel to or along which a lengthwise axis 302 can be defined. Along its lengthwise axis 302a,b,c, each snap fit joint 300 is oriented in an oblique downward and forward direction. However, the lengthwise axis 302a,b,c of each snap fit joint 300 is generally or approximately parallel to each axis in the side view. As a result of this orientation of the lengthwise axis 302 of the snap fit joints 300, the front cover 200 can be snap fit engaged with the inner cover 100 by way of displacement of the front cover 200 towards the inner cover 100 in a rearward and slight upward direction. Such an orientation of snap fit joint lengthwise axis 302 aids quick, easy, reliable snap fit engagement between the front cover 200 and the inner cover 100, and can further aid quick, easy, and error free visual identification of male and female snap elements 310, 330 prior to snap fit engagement of the front cover 200 with the inner cover 100.

In various embodiments, left and right outer edges of the front cover 200 extend beyond respective left and right outer edges of the inner cover 100. Additionally, as a result of snap fit engagement of the front cover 200 with the inner cover 100, the both side edges of the front cover 200 overlay the edges of the inner cover 100, respectively, to form an overlapping portion 340 along an outer periphery of the front cover structure 10. For instance, FIG. 4B illustrates the first snap fit joint 300a-R as viewed along cross section AA of FIG. 4A. As shown in FIG. 4B, an overlapping portion 340R is formed where the outward edge of the front cover 200 interfaces with and overlaps the outward edge of the inner cover 100. Such an overlapping portion 340R enhances the structural stability (e.g., the lateral stability) of the first snap fit joint 300a-R. Furthermore, an engagement portion X where the first female snap element 330a-R and the first male snap element 310a-R are contacted is disposed forward of the overlapping portion 340R. As a result, the force generated when the first female snap element 330a-R snap fit engages with the first male snap element 310a-R pulls the inner cover 100 toward the front cover 200 across an increased distance or width to form the right overlapping portion 340R. As a result, contacting forces at or in the vicinity of the right overlapping portion 340R are better distributed across the overlapping portion 340R, further aiding lateral stability.

The overlapping portion 340R extends downwardly along the outer edge of the front cover structure 10, from at least slightly above the first snap fit joint 300a-R, past the second snap fit joint 300b-R, to at least slightly below the third snap fit joint 300c-R. In FIG. 5B, the position of the overlapping portion 340R relative to the second snap fit joint 300b-R is indicated with an arrow. In FIG. 5C the right overlapping portion 340R is disposed outward from the right third female snap element 330c-R carried by the inner cover 100. A left overlapping portion (not shown) is formed in an identical, essentially identical, or analogous manner to the right overlapping portion 340R.

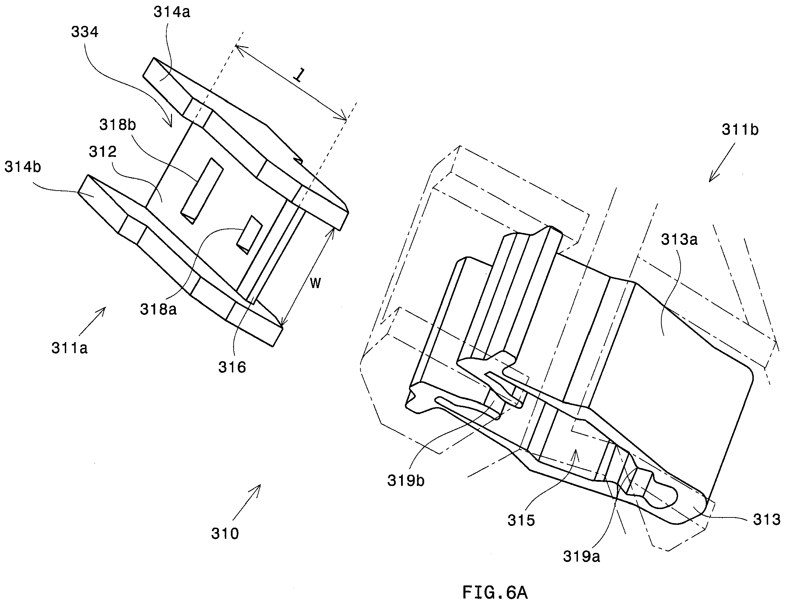

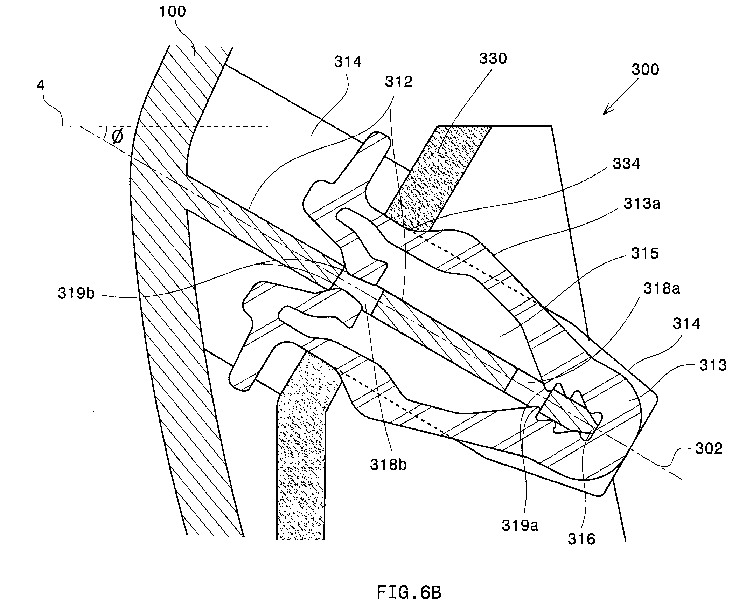

FIG. 6A illustrates particular additional aspects of a representative male snap element 310 comprising a male snap fit wall 311a and a male snap fit 311b made from rubber, gum or soft elastic material; and FIG. 6B is a cross sectional view through a representative snap fit joint 300 formed by way of snap fit engagement of the male snap element 310 with the female snap element 330 of FIG. 6A. The insertion the male snap fit 311b to the male snap fit wall 311a completes the male snap fit element 310. In various embodiments, the male snap fit wall 311a includes a projecting wall 312 having a predetermined width *w* between a pair of side walls 314a,b, and which transversely extends a predetermined length *l* away from the inner cover 100 or the front cover 200 (depending upon the vertical position of a snap fit joint 300 under consideration relative to the inner rack openings 104R,L) to a tip 316 of the male snap fit wall 311a. The projecting wall 312 has a plurality of apertures 318 formed therein, including a first or distal aperture 318a disposed closer to the tip 316 than a second or proximal aperture 318b. Each of the first and second apertures 318a,b is centrally positioned relative to the width w of the projecting member 312. The first aperture 318a is typically narrower than the second aperture 318b.

The male snap fit 311b includes a body 313 retained within a slot or receptacle 334 of the front cover 200 or the inner cover 100 (depending upon the vertical position of the snap fit joint 300 under consideration relative to the inner rack openings 104R,L), which provides an internal cavity 315 into which the male snap element's projecting wall 312 is insertable. The body 313 is securely retained within the slot 334, such as by way of an elastic friction fit and/or an adhesive seal between inner surfaces of the slot 334 and an outer periphery 313a of the body 313. The male snap fit 311b includes first and second engagement portions 319a,b, which are respectively configured for snap fit engagement and locking with the male snap element's first and second apertures 318a,b. During insertion of the male snap fit 311b into the male snap fit wall 311a, planar surfaces of the male snap element's projecting wall 312 can displace the male snap fit's first and second engagement portion 319a,b away from a default position toward the outer periphery 313a of the male snap fit's body 313. As the male snap element's projecting wall 312 is further inserted into the internal cavity 315 of the male snap fit 311b, the presence of a projecting wall aperture 318a,b at or along locations at which the first and second engagement portion 319a,b reside causes the first and second engagement portion 319a,b to resiliently return to their default position, and partially extend into the male snap fit wall's apertures 318a,b. After the male snap fit 311b is fully inserted into the male snap fit wall 311a, the male snap fit element 310 is formed and the male snap fit element 310 is inserted to the female snap fit element 330 which is a hole formed in the front cover 200 or the inner cover 100. After the male snap element 310 and the female snap element 330 are snap fit together, the lengthwise axis 302 of the snap fit joint 300 is downwardly oriented at an angle of φ degrees relative to the aforementioned horizontal plane 4 (for instance, where φ can range between approximately 2 - 15 degrees, e.g., 5 - 10 degrees, depending upon embodiment details).

After snap fit engagement of the front cover 200 to the inner cover 100, the front cover 200 is further secured to the inner cover by way of fastening elements such as screws and/or bolts. As previously described, a lower portion of the front cover includes front cover - front lower cover fixing points 350a-R,L (e.g., bosses, for providing mechanical strength) as shown in FIGs. 1A and 1B, which are configured for receiving screws that secure the front lower cover 250 to the lower portion of the front cover 200. As the front lower cover 250 is secured to the inner cover 100 at the fixing points 360a,b,c-R,L, this means the front cover 200 is secured to the inner cover through the front lower cover 250. Additionally, as shown in FIG. 3A, the upper portion of the inner cover 100 proximate to its collar aperture 120 includes second right and left front cover - inner cover fixing points 350bR,L, at which an upper portion of the inner cover 100 and an upper portion of the front cover 200 are secured together way of fastening elements such as bolts, which enables a further decrease in clearance in up and down directions for the snap fit joints 300a-c, and which further enhances mechanical strength.

FIG. 7 shows the front surface 106 of the inner cover 100, and a representative manner in which the inner rack cover 150 is attached thereto. FIG. 7 includes cross sections DD - HH showing fastening elements 450 inserted into cooperatively aligned apertures of particular inner rack cover mounting members 160 and inner rack cover - inner rack fixing points 400. FIG. 7 also illustrates the male snap elements 310a,b-R,L carried by the inner cover 100 and disposed above the inner rack openings 104R,L, which correspond to the first and second snap fit joints 300a,b-R,L; and each female snap element 330c-R,L carried by the inner cover 100 and disposed below the inner rack openings 104R,L, which correspond to the third snap fit joints 300c-R,L.

In various embodiments, the inner rack cover 150 is installed on the inner cover 100 by way of an alignment of apertures formed in mounting members 160 of the inner rack cover 150 with bosses 400a-e formed in the inner cover 100, and the insertion of tapping screws 450 through such apertures into the bosses 400a-e. Each boss 400a-e is configured for receiving the full shaft length of a tapping screw 450, and strongly supporting and securely retaining the inner rack cover 150 at predetermined positions on the inner cover's anterior surface 106. The inner rack cover 150 has five fixing points, and upper portions 160a,160d and lower portions 160c,160e have a distance almost the same as the distance between the second snap fit joint 300b and the third snap fit joint 300c. This means that such fixing points 160a,d, 160c,e are close to the second and third snap fit joints 300b,c and thus this layout causes easier assembly and more stable connection of such snap fit joints 300b,c.

Aspects of particular embodiments in accordance with the present disclosure address at least one aspect, problem, limitation, and/or disadvantage associated with existing motorcycle cover structures in which a front cover is mounted to an inner cover by way of snap fit joints. While features, aspects, and/or advantages associated with certain embodiments have been described in the disclosure, other embodiments may also exhibit such features, aspects, and/or advantages, and not all embodiments need necessarily exhibit such features, aspects, and/or advantages to fall within the scope of the disclosure. It will be appreciated by a person of ordinary skill in the art that several of the above-disclosed structures, components, or alternatives thereof, can be desirably combined into alternative structures, components, and/or applications. In addition, various modifications, alterations, and/or improvements may be made to various embodiments that are disclosed by a person of ordinary skill in the art within the scope of the present disclosure, which is limited only by the following claims.

## Claims

1. A motorcycle front cover structure (10) comprising:
a front cover (200) surrounding front portions of a steering head pipe (20), the front cover (200) having a rear side facing the steering head pipe (20); and
an inner cover (100) surrounding rear portions of the steering head pipe (20), the inner cover (100) including a front side facing the steering head pipe (20), and mounting an inner rack rearward (152R, 152L),
wherein the rear side of said front cover (200) is attached to the front side of said inner cover (100) by way of a plurality of snap fit joints (300), each of the plurality of snap fit joints (300) formed by mating snap fit engagement of a male snap element (310) with a female snap element (330),
**characterized in that**:
above an inner rack opening (104) corresponding to said inner rack (152R, 152L), said inner cover (100) carries said male snap element (310), and below said inner rack opening (104), said front cover (200) carries said male snap element (310).

2. The motorcycle front cover structure (10) of claim 1, wherein said inner cover (100) includes a hole portion forming a part of said inner rack opening (104), and wherein an inner rack cover (150) is mounted to said inner cover (100) from forward as forming said inner rack opening (104) together with the hole portion of said inner cover (100).

3. The motorcycle front cover structure (10) of claim 1 or 2, wherein from a side view:
a first snap fit joint (300a) is disposed at an upper portion of said front cover (200),
a second snap fit joint (300b) is disposed below the first snap fit joint (300a) and above said inner rack opening (104), and the first and second snap fit joints (300a, 300b) include said female snap element (330) carried by said front cover (200) and said male snap element (310) carried by said inner cover (100); and
a third snap fit joint (300c) is disposed below said inner rack opening (104), and includes said male snap element (310) carried by the front cover (200) and said female snap element (330) carried by said inner cover (100).

4. The motorcycle front cover structure (10) of any one of claims 1 to 3, wherein a lengthwise axis of each snap fit joint (300) is oriented in an oblique downward and forward direction, and the lengthwise axis of each snap fit joint (300) is approximately parallel to each other snap fit joint lengthwise axis.

5. The motorcycle front cover structure (10) of any one of claims 1 to 4, wherein left and right outer sides of said front cover (200) form an overlapping portion that overlaps left and right outer sides of said inner cover (100) from outsides, respectively, and wherein an engagement portion of said snap fit joints (300) are disposed forward of the overlapping portion from a side view.

6. The motorcycle front cover structure (10) of claim 3 or claim 3 in combination with any one of claims 4 and 5, wherein said inner rack cover (150) is integrally formed to extend proximate to right and left outer sides of said inner cover (100) to respectively provide a right inner rack pocket (154R) and a left inner rack pocket (154L), and wherein said inner rack cover (150) is secured to said inner cover (100) by upper and lower fastening elements between said second snap fit joint (300b) and said third snap fit joint (300c).

7. The motorcycle front cover structure (10) of claim 3 or claim 3 in combination with any one of claims 4 to 6, wherein:
said snap fit joints (300) have a connecting force in side direction,
said front cover (200) and said inner cover (100) are secured to each other by way of fastening elements disposed above or close to said first snap fit joint (300a),
a front lower cover (250) and a lower portion of said front cover (250) are secured to each other by way of fastening elements, and
the front lower cover (250) is secured to said inner cover (100) from forward by fastening elements.

## Patentansprüche

1. Frontverkleidungsstruktur (10) eines Motorrads, die aufweist:
eine Frontverkleidung (200), die vordere Bereiche eines Lenkkopfrohrs (20) umgibt,
wobei die Frontverkleidung (200) eine Rückseite aufweist, die dem Lenkkopfrohr (20) zugewandt ist; und
eine Innenverkleidung (100), die die rückseitigen Bereiche des Lenkkopfrohrs (20) umgibt, wobei die Innenverkleidung (200) eine Vorderseite aufweist, die dem Lenkkopfrohr (20) zugewandt ist, und ein inneres Gestell (152R, 153L) an der Rückseite befestigt.
wobei die Rückseite der Frontverkleidung (200) an der Vorderseite der Innenverkleidung (100) über eine Vielzahl von Schnappverbindungen (300) angebracht ist, wobei eine jede der Vielzahl der Schnappverbindungen (300) durch einen passenden Schnappeingriff eines aufzunehmenden Schnappelements (310) mit einem aufnehmenden Schnappelement (330) ausgebildet ist,
**dadurch gekennzeichnet, dass**:
über eine Öffnung (104) des inneren Gestells, die dem inneren Gestell (152R, 152L) entspricht, die Innenverkleidung (100) das aufzunehmende Schnappelement (310) trägt, und unter der Öffnung (104) des inneren Gestells die Frontverkleidung (200) das aufzunehmende Schnappelement (310) trägt.

2. Frontverkleidungsstruktur (10) eines Motorrads nach Anspruch 1, wobei die Innenverkleidung (100) einen Lochbereich aufweist, der einen Teil der Öffnung (104) des inneren Gestells bildet, und wobei eine Innengestellverkleidung (150) an der Innenverkleidung (100) von vorne angebracht ist, um die Öffnung (104) des inneren Gestells zusammen mit dem Lochbereich der Innenverkleidung (100) zu bilden.

3. Frontverkleidungsstruktur (10) eines Motorrads nach Anspruch 1 oder 2, wobei in einer Seitenansicht:
ein erstes Schnappgelenk (300a) an einem oberen Bereich der Frontverkleidung (200) angeordnet ist,
ein zweites Schnappgelenk (300b) unter dem ersten Schnappgelenk (300a) und über der Öffnung (104) des inneren Gestells angeordnet ist, und das erste und das zweite Schnappgelenk (300a, 300b) das aufnehmende Schnappelement (330), das von der Frontverkleidung (200) getragen wird, und das aufzunehmende Schnappelement (310), das von der Innenverkleidung (100) getragen wird; aufweisen, und
ein drittes Schnappgelenk (300c) unter der Öffnung (104) des inneren Gestells angeordnet ist und ein aufzunehmendes Schnappelement (310), das von der Frontverkleidung (200) getragen wird, und das aufnehmende Schnappelement (330), das von der Innenverkleidung (100) getragen wird, aufweist.

4. Frontverkleidungsstruktur (10) eines Motorrads nach einem der Ansprüche 1 bis 3, wobei eine Längsachse eines jeden Schnappgelenks (300) in einer Richtung schräg nach unten und vorne ausgerichtet ist, und die Längsachse eines jeden Schnappgelenks (300) in etwa parallel zu jeder anderen Schnappgelenk-Längsachse ist.

5. Frontverkleidungsstruktur (10) eines Motorrads nach einem der Ansprüche 1 bis 4, wobei die linke und rechte Außenseite der Frontverkleidung (200) einen Überlappungsbereich bilden, der die linke und rechte Außenseite der Innenverkleidung (100) jeweils von außen überlappt, und wobei ein Eingriffsbereich der Schnappgelenke (300) in einer Seitenansicht vor dem Überlappungsbereich angeordnet ist.

6. Frontverkleidungsstruktur (10) eines Motorrads nach Anspruch 3 oder Anspruch 3 in Kombination mit einem beliebigen von Anspruch 4 und 5, wobei die Innengestellverkleidung (150) integral ausgebildet ist, um in der Nähe der rechten und linken Außenseite der Innenverkleidung (100) zu verlaufen, um jeweils eine rechte Innengestelltasche (154R) und eine linke Innengestelltasche (154L) vorzusehen, und wobei eine Innengestellverkleidung (150) an der Innenverkleidung (100) durch obere und untere Befestigungselemente zwischen der zweiten Schnappverbindung (300b) und der dritten Schnappverbindung (300c) befestigt ist.

7. Frontverkleidungsstruktur (10) eines Motorrads nach Anspruch 3 oder Anspruch 3 in Kombinationen mit einem beliebigen der Ansprüche 4 bis 6, wobei:
die Schnappverbindungen (300) eine Verbindungskraft in der Seitenrichtung aufweisen, wobei die Frontverkleidung (200) und Innenverkleidung (100) aneinander mittels Befestigungselementen befestigt sind, die über oder nahe der ersten Schnappverbindung (300a) angeordnet sind,
eine untere Frontverkleidung (250) und ein unterer Bereich der Frontverkleidung (250) aneinander mittels Befestigungselementen befestigt sind, und
die untere Frontverkleidung (52) an der Innenverkleidung (100) von vorne durch Befestigungselemente befestigt ist.

## Revendications

1. Structure de couvercle avant de motocyclette (10) comprenant :
un couvercle avant (200) entourant les parties avant d'une tubulure de refoulement de direction (20), le couvercle avant (200) ayant un côté arrière faisant face à la tubulure de refoulement de direction (20) ; et
un couvercle interne (100) entourant des parties arrière de la tubulure de refoulement de direction (20), le couvercle interne (100) comprenant un côté avant faisant face à la tubulure de refoulement de direction (20), et sur lequel est monté une crémaillère interne vers l'arrière (152R, 152L),
dans laquelle le côté arrière dudit couvercle avant (200) est fixé au côté avant dudit couvercle interne (100) au moyen d'une pluralité de joints d'encliquetage (300), chacun de la pluralité de joints d'encliquetage (300) étant formé par mise en prise par encliquetage de couplage d'un élément d'encliquetage mâle (310) avec un élément d'encliquetage femelle (330),
**caractérisée en ce que** :
au-dessus d'une ouverture de crémaillère interne (104) correspondant à ladite crémaillère interne (152R, 152L), ledit couvercle interne (100) porte ledit élément d'encliquetage mâle (310) et en-dessous de ladite ouverture de crémaillère interne (104), ledit couvercle avant (200) porte ledit élément d'encliquetage mâle (310).

2. Structure de couvercle avant de motocyclette (10) selon la revendication 1, dans laquelle ledit couvercle interne (100) comprend une partie de trou formant une partie de ladite ouverture de crémaillère interne (104), et dans laquelle un couvercle de crémaillère interne (150) est monté sur ledit couvercle interne (100) depuis l'avant, comme formant ladite ouverture de crémaillère interne (104) conjointement avec la partie de trou dudit couvercle interne (100).

3. Structure de couvercle avant de motocyclette (10) selon la revendication 1 ou 2, dans laquelle, à partir d'une vue latérale :
un premier joint d'encliquetage (300a) est disposé au niveau d'une partie supérieure dudit couvercle avant (200),
un deuxième joint d'encliquetage (300b) est disposé en-dessous du premier joint d'encliquetage (300a) et au-dessus de ladite ouverture de crémaillère interne (104), et les premier et deuxième joints d'encliquetage (300a, 300b) comprennent ledit élément d'encliquetage femelle (330) porté par ledit couvercle avant (200) et ledit élément d'encliquetage mâle (310) porté par ledit couvercle interne (100) ; et
un troisième joint d'encliquetage (300c) est disposé en-dessous de ladite ouverture de crémaillère interne (104), et comprend ledit élément d'encliquetage mâle (310) porté par le couvercle avant (200) et ledit élément d'encliquetage femelle (330) porté par ledit couvercle interne (100).

4. Structure de couvercle avant de motocyclette (10) selon l'une quelconque des revendications 1 à 3, dans laquelle un axe dans le sens de la longueur de chaque joint d'encliquetage (300) est orienté dans une direction descendante et avant oblique, et l'axe dans le sens de la longueur de chaque joint d'encliquetage (300) est approximativement parallèle à un autre axe dans le sens de la longueur de joint d'encliquetage.

5. Structure de couvercle avant de motocyclette (10) selon l'une quelconque des revendications 1 à 4, dans laquelle les côtés externes gauche et droit dudit couvercle avant (200) forment une partie chevauchante qui recouvre les côtés externes gauche et droit dudit couvercle interne (100) depuis l'extérieur, respectivement, et dans laquelle une partie de mise en prise desdits joints d'encliquetage (300) est disposée vers l'avant de la partie chevauchante d'après une vue latérale.

6. Structure de couvercle avant de motocyclette (10) selon la revendication 3 ou la revendication 3 en combinaison avec l'une quelconque des revendication 4 et 5, dans laquelle ledit couvercle de crémaillère interne (150) est formé de manière solidaire pour s'étendre à proximité des côtés externes droit et gauche dudit couvercle interne (100) pour fournir respectivement une poche de crémaillère interne droite (154R) et une poche de crémaillère interne gauche (154L) et dans laquelle ledit couvercle de crémaillère interne (150) est fixé sur ledit couvercle interne (100) par des éléments de fixations supérieur et inférieur entre ledit deuxième joint d'encliquetage (300b) et ledit troisième joint d'encliquetage (300c).

7. Structure de couvercle avant de motocyclette (10) selon la revendication 3 ou la revendication 3 en combinaison avec l'une quelconque des revendication 4 à 6, dans laquelle :
lesdits joints d'encliquetage (300) ont une force de raccordement dans la direction latérale,
ledit couvercle avant (200) et ledit couvercle interne (100) sont fixés entre eux au moyen d'éléments de fixation disposés au-dessus ou à proximité dudit premier joint d'encliquetage (300a),
un couvercle inférieur avant (250) et une partie inférieure dudit couvercle avant (250) sont fixés entre eux au moyen d'éléments de fixation, et
le couvercle inférieur avant (250) est fixé sur ledit couvercle interne (100) depuis l'avant par des éléments de fixation.
